# EUROPEAN PATENT APPLICATION

(11) **EP 3 229 218 A1**
(43) Date of publication of application: **11.10.2017**
(21) Application number: 15865166.1
(22) Date of filing: 21.10.2015
(51) Int. Cl.: G09B 7/08, G06Q 50/20, G09B 7/07

(54) **INFORMATION PROCESSING DEVICE, INFORMATION PROCESSING METHOD, AND COMPUTER PROGRAM**

(30) Priority: 03.12.2014 JP 2014244855
(71) Applicant: Sony Corporation, Tokyo 108-0075 (JP)
(72) Inventor: IKENAGA, Yoshihiko, Tokyo 141-0022 (JP); ISOZU, Masaaki, Tokyo 141-0022 (JP); SASAKI, Takehiko, Tokyo 141-0022 (JP); WATANABE, Kazuhiro, Tokyo 141-0022 (JP); TAKAE, Shinji, Tokyo 141-0022 (JP); TAKAGI, Junichiro, Tokyo 141-0022 (JP)
(74) Representative: MFG Patentanwälte Meyer-Wildhagen Meggle-Freund Gerhard PartG mbB
(86) International application number: PCT/JP2015/079710
(87) International publication number: WO 2016/088463

(57) **Abstract**

[Object] To provide an information processing device which can provide a user with a question corresponding to a degree of learning comprehension of the user.

[Solution] Provided is the information processing device including: a control unit configured to obtain a degree of learning and an acquisition speed of a user, generate a question to the user on a basis of the obtained degree of learning, and generate a similar question related to the generated question on a basis of the obtained acquisition speed. The information processing device with the configuration can provide a user with a question corresponding to a degree of learning comprehension of the user by using indexes of a degree of learning and an acquisition speed of the user.

## Description

### Technical Field

The present disclosure relates to an information processing device, an information processing method, and a computer program.

### Background Art

Such a technology is disclosed that a class is given to users online via a network such as the Internet or Intranet, a question is given to the users, and the users are allowed to answer the question (e.g., refer to Patent Literatures 1 and 2).

### Citation List

### Patent Literature

- Patent Literature 1:: JP9-34344A
- Patent Literature 2:: JP2001-249609A

### Disclosure of Invention

### Technical Problem

Conventionally, a user answers a question prepared on a question giving side. However, it is difficult for the question giving side to determine at which level the user actually understands the question only by answering the question prepared by the question giving side.

Accordingly, the present disclosure proposes an information processing device, an information processing method, and a computer program with novelty and improvement, which can provide a user with a question corresponding to a degree of learning comprehension of the user.

### Solution to Problem

According to the present disclosure, there is provided an information processing device including: a control unit configured to obtain a degree of learning and an acquisition speed of a user, generate a question to the user on a basis of the obtained degree of learning, and generate a similar question related to the generated question on a basis of the obtained acquisition speed.

In addition, according to the present disclosure, there is provided an information processing method including: obtaining a degree of learning and an acquisition speed of a user; generating a question to the user on a basis of the obtained degree of learning; and generating a similar question related to the generated question on a basis of the obtained acquisition speed.

In addition, according to the present disclosure, there is provided a computer program for causing a computer to execute: obtaining a degree of learning and an acquisition speed of a user; generating a question to the user on a basis of the obtained degree of learning; and generating a similar question related to the generated question on a basis of the obtained acquisition speed.

### Advantageous Effects of Invention

As mentioned above, according to the present disclosure, it is possible to provide an information processing device, an information processing method, and a computer program with novelty and improvement, which can provide a user with a question corresponding to a degree of learning comprehension of the user.

Note that the effects described above are not necessarily limitative. With or in the place of the above effects, there may be achieved any one of the effects described in this specification or other effects that may be grasped from this specification.

### Brief Description of Drawings

[FIG. 1] FIG. 1 is an explanatory diagram showing a system configuration example of a learning system 10 according to an embodiment of the present disclosure.
[FIG. 2] FIG. 2 is an explanatory diagram showing a functional configuration example of a question management server 100.
[FIG. 3] FIG. 3 is an explanatory diagram showing a functional configuration example of an answering terminal 200.
[FIG. 4] FIG. 4 is an explanatory diagram for explaining an outline of an operation of the question management server 100.
[FIG. 5] FIG. 5 is an explanatory diagram showing examples of a template, a condition applied to the template, and a question sentence.
[FIG. 6] FIG. 6 is a flow chart showing an operational example of the question management server 100.
[FIG. 7] FIG. 7 is a flow chart showing an operational example of the question management server 100.
[FIG. 8] FIG. 8 is an explanatory diagram showing examples of selecting a question and providing a similar question corresponding to a degree of learning, an acquisition speed, and a degree of concentration of a user by the question management server 100.
[FIG. 9] FIG. 9 is an explanatory diagram showing an example of a question generated by the question management server 100.
[FIG. 10] FIG. 10 is an explanatory diagram showing an example of a question generated by the question management server 100.
[FIG. 11] FIG. 11 is an explanatory diagram showing a hardware configuration example.

### Mode(s) for Carrying Out the Invention

Hereinafter, (a) preferred embodiment(s) of the present disclosure will be described in detail with reference to the appended drawings. In this specification and the appended drawings, structural elements that have substantially the same function and structure are denoted with the same reference numerals, and repeated explanation of these structural elements is omitted.

Note that a description will be given in the following order.
1. An embodiment of the present disclosure
   1.1. Background
   1.2. Configuration example
   1.3. Operational example
2. Hardware configuration example
3. Conclusion

### <1. An embodiment of the present disclosure>

### [1.1. Background]

A description will be given of a background of the present disclosure before specifically explaining an embodiment of the present disclosure.

As described above, there is such a technology that a class is given to users online via a network such as the Internet or Intranet, a question is given to the users, and the users are allowed to answer the question. Conventionally, a question prepared on the question giving side for allowing a user to answer the question is the same to any user. Further, an explanation prepared on the question giving side to the question given to all users and also a similar question for allowing a user to check whether the user really understands the question together with the explanation have been the same to any user.

However, there is a large breadth in an advancing level of learning and a degree of understanding on a field as a learning target depending on users. Therefore, in a case of giving the same question to any user, it is required to make a question in consideration of the advancing level and the degree of understanding, and it thus takes a longer time to make the question. Further, in a case of giving the same question to all users, phenomena may occur such that the question is too easy for one user and too difficult for another user. Furthermore, in a case where the explanation to the question and the similar question are static, it is difficult to check whether the user really understands the question.

Therefore, the discloser examined a technology that makes it possible to reduce a time required for making a question to allow a user to answer the question online via a network and to provide a user with the question corresponding to a learning state of the user. Consequently, as will be described later, the discloser devised a technology that makes it possible to reduce the time required for making the question by automatically making a question depending on the learning state of the user and to provide the user with the question corresponding to the degree of learning comprehension of the user.

The background of the embodiment of the present disclosure has been described above.

### [1.2. Configuration example]

Subsequently, a specific description will be given of the embodiment of the present disclosure. First, a description will be given of a system configuration example of a learning system according to an embodiment of the disclosure.

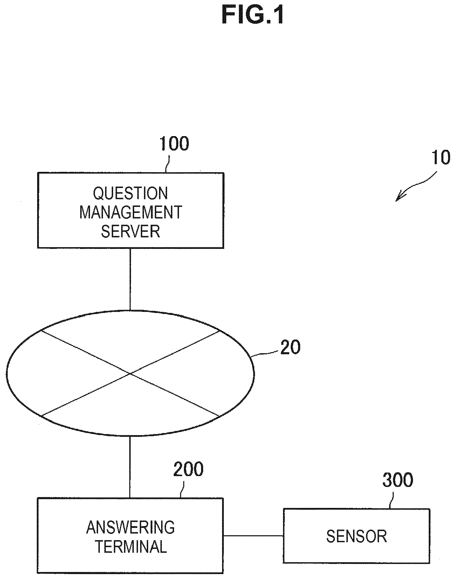

FIG. 1 is an explanatory diagram showing a system configuration example of a learning system 10 according to an embodiment of the present disclosure. FIG. 1 shows the system configuration example of the learning system 10 for the purpose of automatically making a question depending on a learning state of the user and allowing the user to answer the question. Hereinbelow, a description will be given of the system configuration example of the learning system 10 according to the embodiment of the present disclosure by use of FIG. 1.

As shown in FIG. 1, the learning system 10 according to the embodiment of the present disclosure includes: a question management server 100; an answering terminal 200; and a sensor 300. Each of the question management server 100 and the answering terminal 200 is connected to a network 20 such as the Internet and the Intranet. The question management server 100 and the answering terminal 200 may be connected to the network 20 in a wired or wireless manner.

The question management server 100 is a server for managing questions given to a user. The question management server 100 holds in advance a template as the base of questions given to the user, and automatically makes questions, explanations, and similar questions by using the template depending on the state of the user. A generating timing of the questions, explanations, and similar questions of the question management server 100 is not limited to a specific time point. The question management server 100 may generate questions, explanations, and similar questions at, e.g., a predetermined time, and may generate the questions, explanations, and similar questions at a start timing of user's learning.

The answering terminal 200 is a terminal for answering the questions given from the question management server 100, such as a personal computer, a tablet-type terminal, or a smartphone (sophisticated mobile phone). A user who answers the question given by the question management server 100 answers the question given from the question management server 100 with the answering terminal 200 by using a character input with a keyboard, a mouse, or a touch panel, a sound input through a microphone, gesture using a camera, and the like. The answering terminal 200 answers the question given from the question management server 100 and sends the answer to the question management server 100.

A sensor 300 is a device that senses a state of the answering terminal 200 and a state of a user who uses the answering terminal 200. Such sensors constituting the sensor 300 can include a sensor that acquires the current position, such as a global positioning system (GPS), global navigation satellite system (GLONASS), and BeiDou Navigation Satellite System (BDS), a camera, a camera with depth information, a human detection sensor, and a microphone, for example. The sensor 300 detects acceleration and angular speed applied to the device, direction, illuminance, temperature, atmospheric pressure, and the like. The above various sensors, for example, in a case where an apparatus including the sensor is carried by or attached to a user, can detect various information as information about the user, e.g., information indicating movement or direction of the user. The sensor 300 may also include a sensor that detects biological information of the user, such as heart beats, sweat, brain waves, a sense of touching, a sense of smelling, and a sense of tasting.

The answering terminal 200 can grasp a state of the answering terminal 200 and a state of a user who uses the answering terminal 200 on the basis of sensing data sent from the sensor 300. Further, the answering terminal 200 sends the sensing data sent from the sensor 300 to the question management server 100. The question management server 100 can grasp the state of the answering terminal 200 and the state of the user who uses the answering terminal 200 on the basis of the sensing data sent from the sensor 300 via the answering terminal 200. Then, the question management server 100 can dynamically change the question given to the user or change contents provided to the user depending on the state of the answering terminal 200 and the state of the user who uses the answering terminal 200, that can be grasped on the basis of the sensing data.

Note that FIG. 1 shows an example of connecting the sensor 300 to the answering terminal 200. However, the present disclosure is not limited to the example. Obviously, a part or all of devices forming the sensor 300 may be incorporated into the answering terminal 200. Further, FIG. 1 shows an example of connecting the sensor 300 to the answering terminal 200, but the answering terminal 200 and the sensor 300 may be connected in a wired or wireless manner.

The learning system 10 according to the embodiment of the present disclosure has the configuration shown in FIG. 1, thereby allowing the user to answer the question given by the question management server 100 with the answering terminal 200. Further, the learning system 10 according to the embodiment of the present disclosure has the configuration shown in FIG. 1. Consequently, the question management server 100 can automatically generate the question corresponding to the state of the learning of the user and give the generated question to the user.

As mentioned above, the description has been given of the configuration example of the learning system 10 according to the embodiment of the present disclosure by use of FIG. 1. Subsequently, a description will be given of a functional configuration example of the question management server 100 included in the learning system 10 according to the embodiment of the present disclosure.

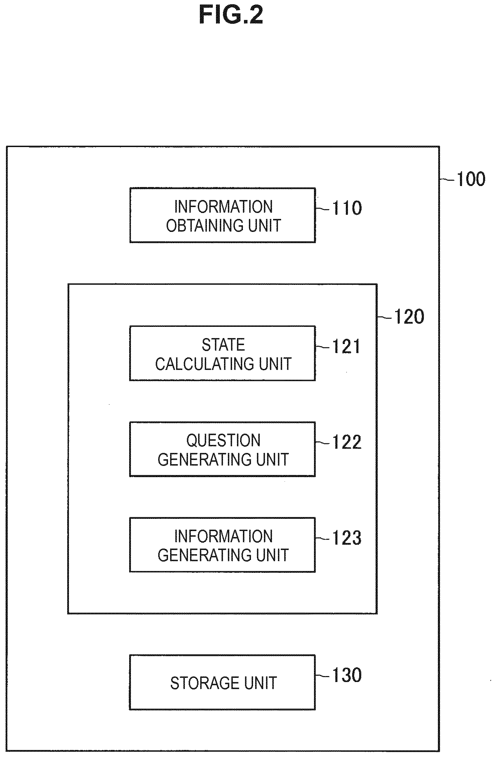

FIG. 2 is an explanatory diagram showing a functional configuration example of the question management server 100 included in the learning system 10 according to the embodiment of the present disclosure. FIG. 2 shows the functional configuration example of the question management server 100 having a function for automatically generating the question corresponding to the state of the learning of the user. Hereinbelow, a description will be given of the functional configuration example of the question management server 100 by use of FIG. 2.

As shown in FIG. 2, the question management server 100 according to the embodiment of the present disclosure includes an information obtaining unit 110, a control unit 120, and a storage unit 130.

The information obtaining unit 110 obtains various information. In the present embodiment, the information obtaining unit 110 obtains the state of the learning of the user who answers the question by using the answering terminal 200, and also obtains the sensing data of the sensor 300 sent via the answering terminal 200. The state of learning of the user is stored in, .e.g., the storage unit 130. The information obtaining unit 110 properly obtains the state of the learning of the user from the storage unit 130. The information obtained by the information obtaining unit 110 is used in a case of generating the question, explanation of the question, and similar question of the question in a question generating unit 122, which will be described later.

The control unit 120 includes, e.g., a central processing unit (CPU), a read only memory (ROM), and a random access memory (RAM), and controls operations of the question management server 100.

As shown in FIG. 2, the control unit 120 includes a state calculating unit 121, a question generating unit 122, and an information generating unit 123.

The state calculating unit 121 calculates the state of learning of the user. The state calculating unit 121 calculates the state of the learning of the user, and allows the storage unit 130 to store the state of the learning of the user. In the present embodiment, the state calculating unit 121 updates the state of the learning of the user depending on the answering situation of the question and the similar question of the user. Therefore, the state calculating unit 121 can function as an example of a learning situation updating unit of the present disclosure.

The question generating unit 122 automatically generates the question for allowing the user to answer with the answering terminal 200, the explanation of the question, and the similar question of the question. The question generating unit 122 generates the question on the basis of the state of the learning of the user calculated by the state calculating unit 121 and obtained by the information obtaining unit 110 and the sensing data of the sensor 300 in a case of generating the question for allowing the user to answer, the explanation of the question, and the similar question of the question.

According to the present embodiment, in a case of generating the question for allowing the user to answer, the question generating unit 122 uses indexes of a degree of learning, an acquisition speed and a degree of concentration of the user. The question generating unit 122 reads the template corresponding to the indexes of the degree of learning, acquisition speed and degree of concentration of the user, and applies the value to the template, thereby generating the question and the similar question. The question generating unit 122 updates the indexes of the degree of learning, acquisition speed, and degree of concentration of the user on the basis of the answering situation of the question and similar question of the user, the sensing data from the sensor 300, and the like. A specific description will be given of generating processing of the question and the similar question by the question generating unit 122.

The information generating unit 123 generates information for allowing the answering terminal 200 to display in a graphical user interface (GUI) form, for example. The information generating unit 123 generates information for allowing the answering terminal 200 to display, e.g., contents of a question, an explanation of the question, and a similar question of the question in the GUI form. The information generated by the information generating unit 123 is sent to the answering terminal 200 via the network 20.

The storage unit 130 can include various storage media, e.g., a ROM and a RAM. The storage unit 130 stores a program and various information for operating the question management server 100. The information stored in the storage unit 130 can include the state of the learning of the user who answers the question by using, e.g., the answering terminal 200.

The question management server 100 according to the embodiment of the present disclosure has the configuration as shown in FIG. 2, thereby automatically generating the question and allowing the user to answer the generated question with the answering terminal 200.

As mentioned above, the description has been given of the functional configuration example of the question management server 100 by use of FIG. 2. Subsequently, a description will be given of a functional configuration example of the answering terminal 200 included in the learning system 10 according to the embodiment of the present disclosure.

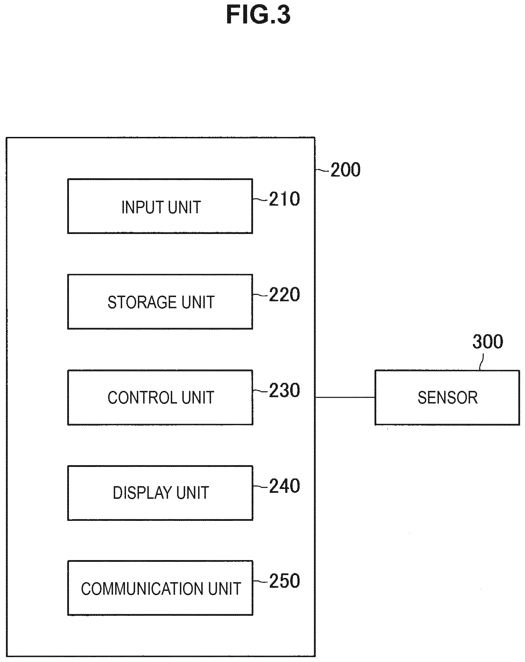

FIG. 3 is an explanatory diagram showing a functional configuration example of the answering terminal 200 according to the embodiment of the present disclosure. FIG. 3 shows the functional configuration example of the answering terminal 200 for answering the question given from the question management server 100. Hereinbelow, a description will be given of the functional configuration example of the answering terminal 200 according to the embodiment of the present disclosure by use of FIG. 3.

As shown in FIG. 3, the answering terminal 200 according to the embodiment of the present disclosure includes an input unit 210, a storage unit 220, a control unit 230, a display unit 240, and a communication unit 250.

The input unit 210 includes various input devices that receive inputs from a user, e.g., a keyboard, a mouse, a touch panel, a microphone, a camera, and the like. The user performs input using the input unit 210 by using a character input with a keyboard, a mouse, and a touch panel, a sound input with a microphone, gesture by a camera and the like.

Further, various sensing devices also can function as the input unit 220. Such sensing devices can include a sensor that acquires the current position, such as a GPS, GLONASS, and BDS, a camera, a camera with depth information, a human detection sensor, and a microphone, for example.

Such sensing devices detect acceleration and angular speed applied to the device, direction, illuminance, temperature, atmospheric pressure, and the like. The above various sensing devices, for example, in a case where an apparatus including the sensing devices is carried by or attached to a user, can detect various information as information about the user, e.g., information indicating movement or direction of the user. The sensing devices may also include a sensor that detects biological information of the user, such as heart beats, sweat, brain waves, a sense of touching, a sense of smelling, and a sense of tasting.

Note that, as mentioned above, a part or all of the sensing devices may be included in the sensor 300 connected to the answering terminal 200, as shown in FIGS. 1 and 3.

The storage unit 220 can have various storage media such as a ROM and a RAM. The storage unit 220 stores a program or various information for operations of the answering terminal 200. The program and various information stored in the storage unit 220 are occasionally read by the control unit 230.

The control unit 230 includes, for example, a CPU, a ROM, and a RAM, and controls operations of the answering terminal 200. In the present embodiment, the control unit 230, for example, controls the display of the GUI to the display unit 240, and executes various processing to an input operation with the input unit 210 by the user to the GUI.

The display unit 240 includes a display panel such as a liquid crystal display or an organic EL display, and is a device that displays various information such as a character or an image. In the present embodiment, as will be described later, the display unit 240 displays a question given by the question management server 100, with a predetermined GUI. Note that the display unit 240 may have a touch panel, and an input operation may be received by user's touching to the display unit 240. Further, the answering terminal 200 may present a question given by the question management server 100 with sound output from a sound output device such as a speaker (not shown) in addition to the display with the display unit 240. In this case, the answering terminal 200 may receive sound data from the question management server 100, or may receive text data from the question management server 100 and convert the text data into sound data with the answering terminal 200.

The communication unit 250 executes communication processing with an external device. Communication processing executed by the communication unit 250 is not limited to a predetermined standard or protocol. In the present embodiment, the communication unit 250 is configured to execute sending and reception of various information to/from the question management server 100 via the network 20. In the present embodiment, the communication unit 250 receives the question, the explanation of the question, and the similar question of the question generated by the question management server 100, and sends the answer of the question and the similar question by the user to the question management server 100.

As mentioned above, the description has been given of the functional configuration example of the answering terminal 200 according to the embodiment of the present disclosure by use of FIG. 3. Subsequently, a description will be given of an operational example of the question management server 100 according to the embodiment of the present disclosure.

### [1.3. Operational example]

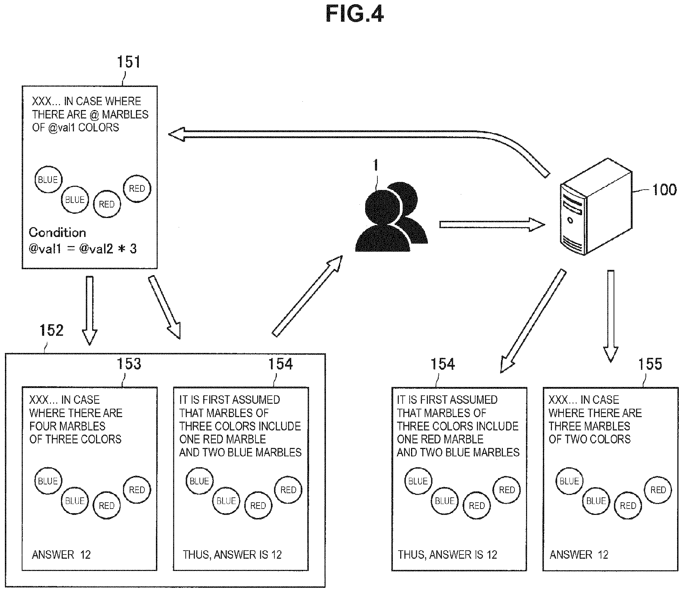

First, a description will be given of an outline of operations of the question management server 100 according to the embodiment of the present disclosure. FIG. 4 is an explanatory diagram for explaining the outline of the operations of the question management server 100 according to the embodiment of the present disclosure. Hereinbelow, a description will be given of the outline of the operations of the question management server 100 according to the embodiment of the present disclosure.

The question management server 100 automatically generates a question on the basis of the state of learning of the user. In a case of generating the question, a template 151 described in advance by a predetermined question description language is used. Then, the question management server 100 generates a question 152 by applying a condition to the template 151. The question 152 includes a question sentence 153 and an explanation sentence 154.

The question management server 100 generates the question 152 with the question generating unit 122, and first generates information for allowing the answering terminal 200 to display the question sentence 153 with the information generating unit 123. Further, the question management server 100 allows the answering terminal 200 to display the question sentence 153 on the basis of the generated information, and allows a user 1 to answer a question described in the question sentence 153. When the user 1 answers the question with the answering terminal 200, the answering terminal 200 sends an answer by the user 1 to the question management server 100.

The question management server 100 scores the answer sent from the answering terminal 200, allows the answering terminal 200 to display the explanation sentence 154 and automatically generates a similar question depending on whether the answer of the user 1 is correct, and further allows the answering terminal 200 to display a similar question sentence 155. When the user 1 answers the similar question described by the similar question sentence 155 with the answering terminal 200, the answering terminal 200 sends the answer by the user 1 to the question management server 100.

The question management server 100 updates the state of learning of the user depending on the answering situation of the question and the similar question by the user 1 with, e.g., the state calculating unit 121, and generates a new question on the basis of the updated state.

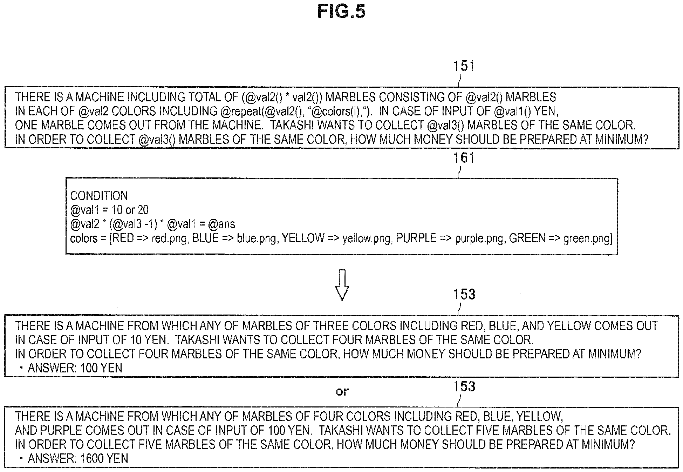

FIG. 5 is an explanatory diagram showing examples of the template 151, a condition 161 applied to a template and a question sentence 153. It is assumed that the template 151 shown in FIG. 5 is prepared in advance, and the condition 161 to be applied to a variable in the template 151 is determined as shown in FIG. 5. The question management server 100 applies the condition 161 to the template 151, thereby enabling generation of two question sentences 153 as shown in FIG. 5. FIG. 5 shows only the question sentences 153. However, obviously, the question management server 100 also generates the explanation sentence 154 corresponding to each question sentence 153.

The question management server 100 uses indexes of the degree of learning, acquisition speed, and degree of concentration of the user in a case of generating the question 152 with the question generating unit 122. The question management server 100 reads the template 151 corresponding to the indexes of the degree of learning, acquisition speed, and degree of concentration of the user, and allocates values to the template 151, thereby generating the question 152. Further, the question management server 100 updates the indexes of the degree of learning, acquisition speed, and degree of concentration of the user on the basis of the answering situations of the question and the similar question by the user 1, the sensing data from the sensor 300, and the like.

Herein, a description will be given of definition of terms in the present embodiment. The degree of learning means an index of degree of understanding to a predetermined learning region of the user. The learning region means a learning range having learning units such as a grade, a class, and a unit. The degree of learning can change by a correct answer rate of the question, required time to answering (oneself and others), and a questionnaire result to the question. The degree of learning of the user is occasionally updated by the state calculating unit 121.

The degree of learning can be set for every learning region. The examples of the learning region may include a region determined for every grade such as a question for a first grade of an elementary school and a question for a second grade thereof, a figure question, a calculation question, and a sentence question. In the learning region, there can be set questions, such as a calculation question for the second grade of the elementary school and a sentence question for the fourth grade thereof.

The degree of learning may be weighted on the basis of a time axis. For example, the degree of learning is not obtained by averaging of the answer results to all past questions, and may be obtained by weighting so as to reflect the recent answer results more. Further, the degree of learning may be weighted on the basis of the degree of concentration, which will be described later.

The degree of learning may be obtained not only on the basis of the answer itself to the question but also on the basis of a process to the answering. For example, in the case of a calculation question, the question management server 100 may calculate a partial point depending on contents of a halfway calculating formula input by the user, to obtain the degree of learning by the partial point.

The acquisition speed is an index of understanding speed to the question that is learnt once by the user. The acquisition speed can change depending on factors of whether the question once answered incorrectly is answered correctly (required time to the answering in case of answering correctly), whether a similar question to the question correctly answered is answered correctly (required time to the answering in a case of correct answer), a correct answer rate and a required time to the answering in a case of answering again a question answered incorrectly, a correct answer rate and a required time to the answering in a case of answering a similar question to the question answered incorrectly, and the like. The acquisition speed of the user is occasionally updated by the state calculating unit 121.

The acquisition speed also can be set for every learning region similarly to the degree of learning. Further, the acquisition speed also may be weighted on the basis of a degree of concentration, which will be described later, similarly to the degree of learning.

The degree of concentration means an index of power of concentration of the user. The degree of concentration is obtained, e.g., by the sensing data sent from the sensor 300. For example, the degree of concentration may be obtained from living-body information (pulse, blood pressure, sight of view, brain waves, sweating, and sleeping history) of the user. The degree of concentration of the user is occasionally updated by the state calculating unit 121.

Further, the degree of concentration may be obtained from time from start of study by the user, environment sound around the user who is studying, time information, a correct answer rate of the question, transition of the required time to the answering, and the like. The question management server 100, in a case of obtaining the degree of concentration on the basis of the time information, may predict a time zone in which the user may concentrate on the basis of a relationship between the time and the correct answer rate of the user and obtain the degree of concentration depending on whether the current time is within the time zone. Further, in a case of obtaining the degree of concentration on the basis of the transition of the required time to the answering, the question management server 100 can determine that the degree of concentration is reduced in a case where the correct answer rate is lower or the answering takes a long time for the similar question than for the question.

The question management server 100 sets parameters such as degree of difficulty, required time, and category for the template of a question to be generated. The degree of difficulty is a parameter calculated from the correct answer rate of the user, and may be weighted by the degree of learning of the user. The required time is an average of time required for answering the question by the user, and may be weighted by the degree of learning of the user. Note that the category is a parameter that is manually set on the question giving side when the question is made. Further, as another parameter, there can be illustration or numerical value displayed together with the question.

The question management server 100, in a case of generating a question, selects the template of the question with high degree of difficulty if the degree of learning of the user is high, and selects the template of the question with low degree of difficulty if the degree of learning of the user is low.

Furthermore, the question management server 100, in a case of generating a similar question, makes contents of the similar question complicated by increasing the number of numerical value parameters or increasing the numerical value if the learning speed of the user is high, and makes the contents of the similar question simple by reducing the number of numerical value parameters or reducing the numerical value if the acquisition speed of the user is low.

Further, in a case where the degree of concentration of the user is high, the question management server 100 may select a question that takes a long required time, reduce the number of illustrations related to the question or similar question, or select the question of a category at which the user is not good. In a case where the degree of concentration of the user is low, the question management server 100 may select a question that takes a short required time, increase the number of illustrations related to the question or the similar question, or select a question of a category at which the user is good. Further, the question management server 100 may generate the question and the similar question to one user on the basis of the degrees of learning and acquisition speeds of a plurality of users in a learning region.

As mentioned above, the description has been given of the outline of the operations of the question management server 100 according to the embodiment of the present disclosure. Subsequently, a description will be given of a specific operational example of the question management server 100 according to the embodiment of the present disclosure.

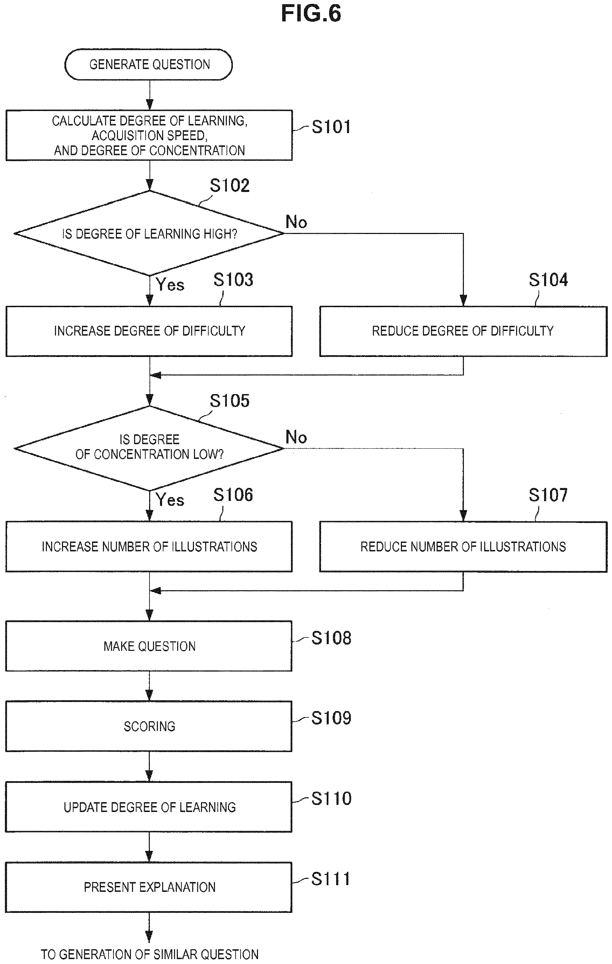

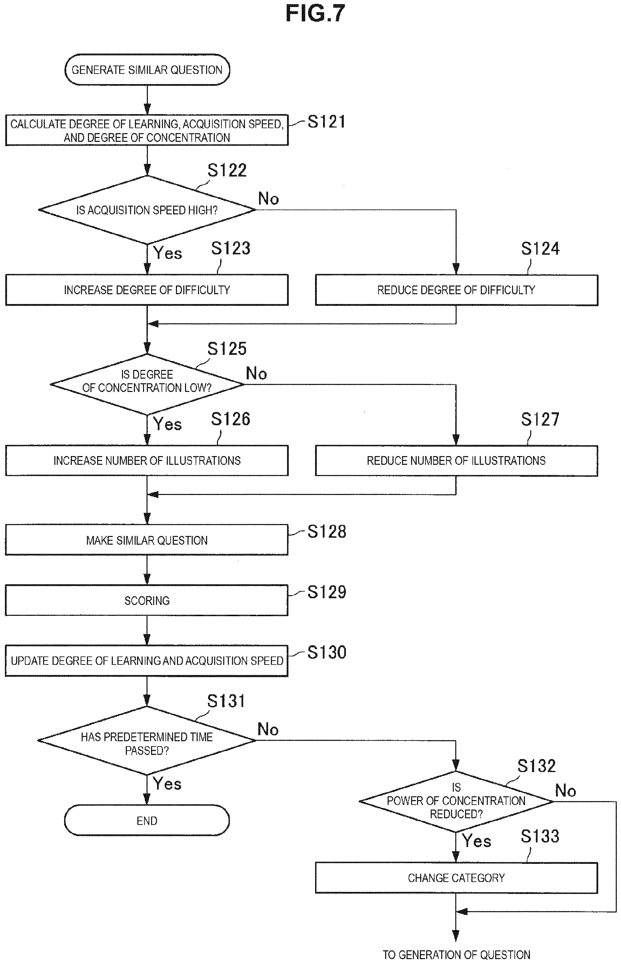

FIGS. 6 and 7 are flow charts showing operational examples of the question management server 100 according to the embodiment of the present disclosure. FIG. 6 shows the operational example of the question management server 100 according to the embodiment of the present disclosure in a case of generating the question depending on the state of the learning of the user. FIG. 7 shows the operational example of the question management server 100 according to the embodiment of the present disclosure in a case of generating the similar question of the question. Hereinbelow, a description will be given of the operational examples of the question management server 100 according to the embodiment of the present disclosure by use of FIGS. 6 and 7.

In a case of generating the question, the question management server 100 according to the embodiment of the present disclosure calculates the degree of learning, acquisition speed, and degree of concentration of the user who answers the question from now (step S101). The calculating processing in step S101 is executed by, e.g., the state calculating unit 121.

After calculating the degree of learning, acquisition speed, and degree of concentration of the user in step S101, the question management server 100 subsequently determines whether the degree of learning of the user is high, specifically, higher than a predetermined threshold (in step S102). The determining processing in step S102 is executed by, e.g., the question generating unit 122.

In a case where the degree of learning of the user is high as a result of the determination in step S102 (Yes in step S102), the question management server 100 selects increasing the degree of difficulty of the question to be generated (step S103). On the other hand, in a case where the degree of learning of the user is low as a result of the determination in step S102 (No in step S102), the question management server 100 selects reducing the degree of difficulty of the question to be generated (step S104). For example, the question generating unit 122 executes the selecting processing in steps S103 and S104.

Subsequently, the question management server 100 determines whether the degree of concentration of the user is low, specifically, lower than a predetermined threshold (step S105). For example, the question generating unit 122 executes the determining processing in step S105.

In a case where the degree of concentration of the user is low as a result of the determination in step S105 (Yes in step S105), the question management server 100 selects increasing the number of illustrations of the question to be generated (step S106). On the other hand, in a case where the degree of concentration of the user is high as a result of the determination in step S105 (No in step S105), the question management server 100 selects reducing the number of illustrations of the question to be generated (step S107). For example, the question generating unit 122 executes the selecting processing in steps S106 and S107.

Subsequently, the question management server 100 makes the question by applying a condition to the template on the basis of the degree of difficulty and the number of illustrations selected as mentioned above (step S108). For example, the question generating unit 122 executes the making processing of the question in step S108. Note that, in the making processing of the question in step S108, a question sentence and an explanation sentence are made. Further, the question management server 100 may add information for identifying the user as a target for answering the question when the question is made. As the information for identifying the user, user ID may be used or a user name may be used.

When the question made in step S108 is presented to the answering terminal 200, and the user answers the question with the answering terminal 200, the question management server 100 scores the answers by the user (step S109). The scoring processing in step S109 is executed by, e.g., the question generating unit 122.

When the user answers the question with the answering terminal 200, the information for identifying the user, the information for identifying the answered question, and the information such as answer to the question are sent to the question management server 100 from the answering terminal 200, for example.

Then, when scoring is performed in step S109, subsequently, the question management server 100 updates the degree of learning of the user on the basis of the scoring result (step S110). For example, the state calculating unit 121 executes the updating processing in step S110.

When the degree of learning of the user is updated in step S110, subsequently, the question management server 100 presents an explanation of the question to the answering terminal 200 (step S111). For example, the information generating unit 123 executes the generation of the information for presenting the explanation in step S111.

When the explanation of the question is presented to the answering terminal 200 in step S111, subsequently, the question management server 100 shifts to generating processing of the similar question. In a case of generating the similar question, the question management server 100 calculates the degree of learning, acquisition speed, and degree of concentration of the user who answers the similar question from now (step S121). For example, the state calculating unit 121 executes the calculating processing in step S121.

When the degree of learning, acquisition speed, and degree of concentration of the user are calculated in step S121, subsequently, the question management server 100 determines whether the acquisition speed of the user is high, specifically, higher than a predetermined threshold (step S122). The determining processing in step S122 is executed by, e.g., the question generating unit 122.

In a case where the acquisition speed of the user is high as a result of the determination in step S122 (Yes in step S122), the question management server 100 selects increasing the degree of difficulty of the similar question to be generated (step S123). On the other hand, in a case where the acquisition speed of the user is low as the result of the determination in step S122 (No in step S122), the question management server 100 selects reducing the degree of difficulty of the similar question to be generated (step S124). For example, the question generating unit 122 executes the selecting processing in steps S123 and S124.

Subsequently, the question management server 100 determines whether the degree of concentration of the user is low, specifically, lower than a predetermined threshold (step S125). For example, the question generating unit 122 executes the determining processing in step S125.

In a case where the degree of concentration of the user is low as a result of the determination in step S125 (Yes in step S125), the question management server 100 selects increasing the number of illustrations of the similar question to be generated (step S126). On the other hand, in a case where the degree of concentration of the user is high as a result of the determination in step S125 (No in step S125), the question management server 100 selects reducing the number of illustrations of the similar question to be generated (step S127). For example, the question generating unit 122 executes the selecting processing in steps S126 and S127.

Subsequently, the question management server 100 makes a similar question by applying a condition to the template on the basis of the selected degree of difficulty and the number of illustrations as mentioned above (step S128). The making processing of the similar question in step S128 is executed by, e.g., the question generating unit 122. Note that, in the making processing of the similar question in step S128, a question sentence and an explanation sentence are made.

When the similar question made in step S128 is presented to the answering terminal 200 and the user answers the question with the answering terminal 200, the question management server 100 scores the answer by the user (step S129). The scoring processing in step S129 is executed by, e.g., the question generating unit 122.

When the user answers the similar question with the answering terminal 200, information for identifying the user, information for identifying the answered similar question, and information such as the answer of the similar question are sent from the answering terminal 200 to the question management server 100.

Then, when the scoring is performed in step S129, subsequently, the question management server 100 updates the degree of learning and the acquisition speed of the user on the basis of the scoring result (step S130). For example, the state calculating unit 121 executes the updating processing in step S130.

Subsequently, the question management server 100 determines whether a predetermined time has passed after the user starts the learning (step S131). The determining processing in step S131 is executed by, e.g., the question generating unit 122.

In a case where a predetermined time has passed after the user starts the learning as a result of the determination in step S131 (Yes in step S131), the question management server 100 ends the making processing of the question and the similar question.

On the other hand, in a case where a predetermined time has not passed after the user starts the learning as a result of the determination in step S131 (No in step S131), subsequently, the question management server 100 determines whether the degree of concentration of the user is reduced (step S132). For example, the question generating unit 122 executes the determining processing in step S132. It can be determined whether the degree of concentration of the user is reduced by indexes about whether reduction pace of the degree of concentration of the user is a predetermined rate or more and whether an amount of reduction of the degree of concentration per unit time is lower than a predetermined threshold.

In a case where the degree of concentration of the user is reduced as a result of the determination in step S132 (Yes in step S132), the question management server 100 changes a category of the question to be given (step S133), and shifts to question making processing again. On the other hand, in a case where the degree of concentration of the user is not reduced as a result of the determination in step S132 (No in step S132), the question management server 100 performs no processing and shifts to the question making processing.

Note that the question management server 100 changes the category of the question to be given in a case where the degree of concentration of the user is reduced in step S133. However, the present disclosure is not limited to the example. The question management server 100 may output contents different from the question to the answering terminal 200 in a case where the degree of concentration of the user is reduced.

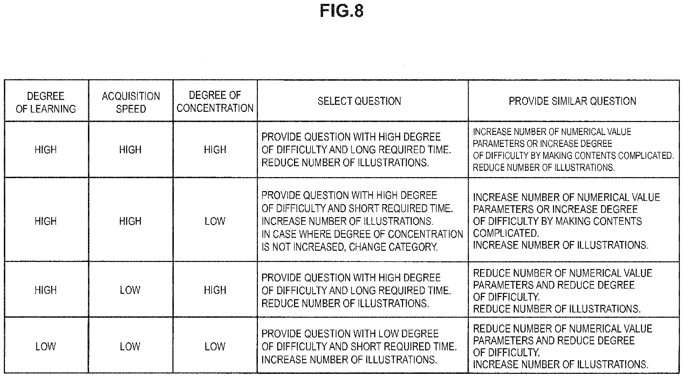

FIG. 8 is an explanatory diagram showing an example of selection of the question and the provision of the similar question by the question management server 100, depending on high or low of the degree of learning, acquisition speed, and degree of concentration of the user. In a case where all of the degree of learning, acquisition speed, and degree of concentration of the user are high, the question management server 100 selects the question with high degree of difficulty, long required time, and reduced number of illustrations in the question, and provides a similar question with the reduced number of illustrations, and an increased number of numerical parameters or higher degree of difficulty by making contents complicated.

In a case where the degree of learning and the acquisition speed of the user are high but the degree of concentration thereof is low, the question management server 100 selects a question with high degree of difficulty, short required time, and an increased number of illustrations in the question, and provides a similar question with an increased number of numerical parameters, higher degree of difficulty , and an increased number of illustrations by making contents complicated. In a case where the degree of concentration of the user is not increased, the question management server 100 changes the category of the question.

In a case where the degree of learning and the degree of concentration of the user are high but the acquisition speed is low, the question management server 100 selects a question with high degree of difficulty, long required time, and a reduced number of illustrations in the question, and a provides a similar question with a reduced number of numerical parameters, lower degree of difficulty, and a reduced number of illustrations.

In a case where all of the degree of learning, acquisition speed, and degree of concentration of the user are low, the question management server 100 selects a question with low degree of difficulty, short required time, and an increased number of illustrations in the question, and provides a similar question with a reduced number of numerical parameters, lower degree of difficulty, and a reduced number of illustrations.

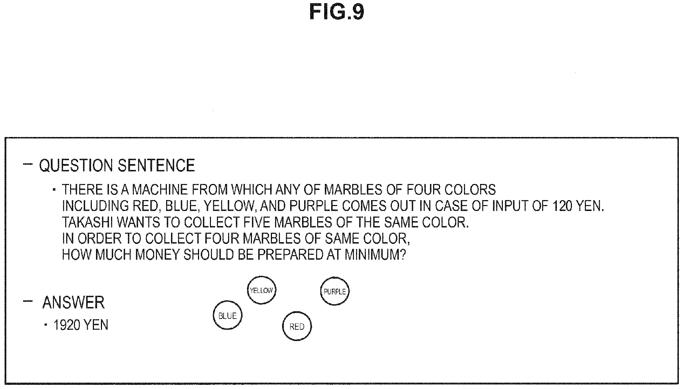

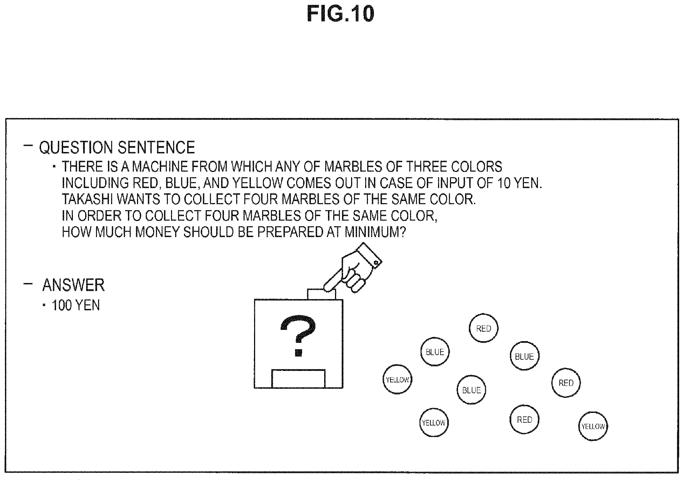

An example of the question generated by the question management server 100 will be shown. FIGS. 9 and 10 are explanatory diagrams showing examples of the question generated by the question management server 100. FIG. 9 shows the example of the question generated by the question management server 100 in a case where the degree of learning and the degree of concentration of the user are high, that is, the example of the question with high degree of difficulty and a reduced number of illustrations.

On the other hand, FIG. 10 shows the example of the question generated by the question management server 100 in a case where the degree of learning and the degree of concentration of the user are low, that is, the example of the question with low degree of difficulty and an increased number of illustrations.

The question management server 100 applies a condition to the template depending on the indexes such as the degree of learning and the degree of concentration of the user, thereby providing the user with the question with changed degree of difficulty and a changed number of illustrations in the question.

In the present embodiment, the case is shown of connecting the question management server 100 and the answering terminal 200 via the network 20. However, the present disclosure is not limited to the example. For example, the question making function that the question management server 100 includes, as mentioned above, may be provided to the answering terminal 200, thereby completing the processing only with the answering terminal 200.

### <2. Hardware configuration example>

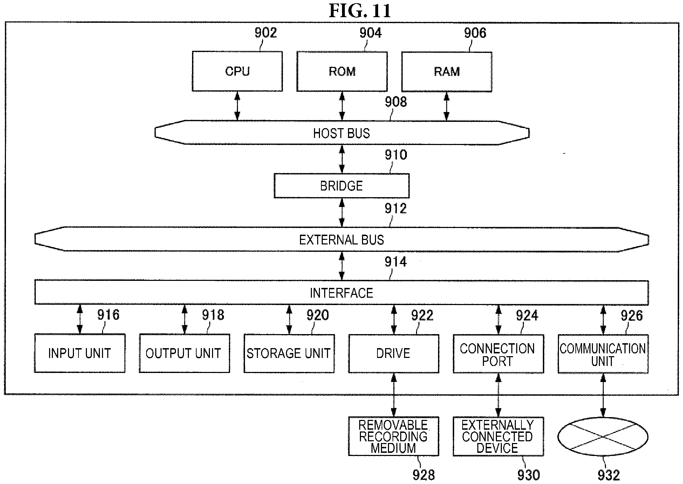

Next, a hardware configuration of the question management server 100 and the answering terminal 200 according to an embodiment of the present disclosure will be described with reference to FIG. 11. FIG. 11 is a block diagram illustrating a hardware configuration example of the question management server 100 and the answering terminal 200 according to the embodiment of the present disclosure. Each of the algorithms described above can be performed by using, for example, the hardware configuration of the information processing apparatus shown in FIG. 11. That is, the processing of each of the algorithms can be realized by controlling the hardware shown in FIG. 11 using a computer program.

Note that the mode of this hardware shown in FIG. 11 is arbitrary, and may be, for example, a personal computer, a mobile information terminal such as a mobile phone, a PHS or a PDA, a game machine, a contact or non-contact IC chip, a contact or non-contact IC card, a loud speaker, a television set, a monitor, a wearable device, or various types of information appliances. Moreover, the PHS is an abbreviation for Personal Handy-phone System. Also, the PDA is an abbreviation for Personal Digital Assistant.

As shown in FIG. 11, this hardware mainly includes a CPU 902, a ROM 904, a RAM 906, a host bus 908, and a bridge 910. Furthermore, this hardware includes an external bus 912, an interface 914, an input unit 916, an output unit 918, a storage unit 920, a drive 922, a connection port 924, and a communication unit 926. Moreover, the CPU is an abbreviation for Central Processing Unit. Also, the ROM is an abbreviation for Read Only Memory. Furthermore, the RAM is an abbreviation for Random Access Memory.

The CPU 902 functions as an arithmetic processing unit or a control unit, and controls entire operation or a part of the operation of each structural element on the basis of various programs recorded on the ROM 904, the RAM 906, the storage unit 920, or a removable recording medium 928. The ROM 904 is a device for storing a program to be read by the CPU 902 or data or the like used in an arithmetic operation. The RAM 906 temporarily or perpetually stores, for example, a program to be read by the CPU 902 or various parameters or the like appropriately changed in execution of the program.

These structural elements are connected to each other by, for example, the host bus 908 capable of performing high-speed data transmission. For its part, the host bus 908 is connected through the bridge 910 to the external bus 912 whose data transmission speed is relatively low, for example. Furthermore, the input unit 916 is, for example, a mouse, a keyboard, a touch panel, a button, a switch, or a lever. Also, the input unit 916 may be a remote controller that can transmit a control signal by using an infrared ray or other radio waves.

The output unit 918 is, for example, a display device such as a CRT, an LCD, a PDP or an ELD, an audio output device such as a speaker or headphones, a printer, a mobile phone, or a facsimile, that can visually or auditorily notify a user of acquired information. The CRT is an abbreviation for Cathode Ray Tube. In addition, the LCD is an abbreviation for Liquid Crystal Display. The PDP is an abbreviation for Plasma Display Panel. Also, the ELD is an abbreviation for Electro-Luminescence Display.

The storage unit 920 is a device for storing various data. The storage unit 920 is, for example, a magnetic storage device such as a hard disk drive (HDD), a semiconductor storage device, an optical storage device, or a magneto-optical storage device. The HDD is an abbreviation for Hard Disk Drive.

The drive 922 is a device that reads information recorded on the removable recording medium 928, for example, a magnetic disk, an optical disc, a magneto-optical disc, or a semiconductor memory, or writes information in the removable recording medium 928. The removable recording medium 928 is, for example, a DVD medium, a Blu-ray medium, an HD-DVD medium, various types of semiconductor storage media, or the like. Of course, the removable recording medium 928 may be, for example, an electronic device or an IC card on which a non-contact IC chip is mounted. The IC is an abbreviation for Integrated Circuit.

The connection port 924 is, for example, a USB port, an IEEE1394 port, a SCSI, an RS-232C port, or a port for connecting an externally connected device 930 such as an optical audio terminal. The externally connected device 930 is, for example, a printer, a mobile music player, a digital camera, a digital video camera, or an IC recorder. The USB is an abbreviation for Universal Serial Bus. Also, the SCSI is an abbreviation for Small Computer System Interface.

The communication unit 926 is a communication device to be connected to a network 932, and is, for example, a communication card for a wired or wireless LAN, Bluetooth (registered trademark), or WUSB, an optical communication router, an ADSL router, or a device for contact or non-contact communication. In addition, the network 932 connected to the communication unit 926 is configured from a wire-connected or wirelessly connected network, and is the Internet, a home-use LAN, infrared communication, visible light communication, broadcasting, or satellite communication, for example. The LAN is an abbreviation for Local Area Network. Also, the WUSB is an abbreviation for Wireless USB. Furthermore, the ADSL is an abbreviation for Asymmetric Digital Subscriber Line.

The example of the hardware configuration of the question management server 100 and the answering terminal 200 has been described. Each of the structural elements described above may be configured by using a general purpose component or may be configured by hardware specialized for the function of each of the structural elements. The configuration may be changed as necessary in accordance with the state of the art at the time of working of the present disclosure.

### <3. Conclusion>

As mentioned above, according to the embodiment of the present disclosure, the question management server 100 is provided which obtains the state of the learning of the user and automatically generates the question corresponding to the state of the learning of the user.

In the embodiment, the question management server 100 uses, as a state of learning of the user, the indexes such as the degree of learning, acquisition speed, and degree of concentration of the user. The question management server 100 selects the template of the question to be given on the basis of the degree of learning, acquisition speed, and degree of concentration of the user, and selects the condition applied to the template, thereby automatically generating the question corresponding to the state of the learning of the user.

The question management server 100 according to the embodiment of the present disclosure automatically generates the question corresponding to the state of the learning of the user. Thus, it is possible to reduce the troublesomeness for making the question on the question giving side and to flexibly provide the question depending on the state of the learning of the user.

It may not be necessary to chronologically execute respective steps in the processing, which is executed by each device of this specification, in the order described in the sequence diagrams or the flow charts. For example, the respective steps in the processing which is executed by each device may be processed in the order different from the order described in the flow charts, and may also be processed in parallel.

Furthermore, it becomes possible to generate a computer program which makes a hardware device, such as a CPU, a ROM, and a RAM incorporated in each device demonstrate the functions equivalent to the configurations of the above described devices. In addition, it becomes also possible to provide a storage medium which stores the computer program. In addition, respective functional blocks shown in the functional block diagrams may be constituted from hardware devices or hardware circuits so that a series of processes may be implemented by the hardware devices or hardware circuits.

In addition, some or all of the functional blocks shown in the functional block diagrams used in the above description may be implemented by a server device that is connected via a network, for example, the Internet. In addition, configurations of the functional blocks shown in the functional block diagrams used in the above description may be implemented in a single device or may be implemented in a system in which a plurality of devices cooperate with one another. The system in which a plurality of devices cooperate with one another may include, for example, a combination of a plurality of server devices and a combination of a server device and a terminal device.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

Note that the effects described above are not necessarily limitative. With or in the place of the above effects, there may be achieved any one of the effects described in this specification or other effects that may be grasped from this specification.

Additionally, the present technology may also be configured as below.
(1) An information processing device including:
   a control unit configured to obtain a degree of learning and an acquisition speed of a user, generate a question to the user on a basis of the obtained degree of learning, and generate a similar question related to the generated question on a basis of the obtained acquisition speed.
(2) The information processing device according to (1),
   wherein the control unit obtains a degree of concentration of the user, and generates the question and the similar question on a basis of the obtained degree of concentration.
(3) The information processing device according to (2),
   wherein the control unit changes a category of a question to be generated in a case where the degree of concentration is a predetermined value or less.
(4) The information processing device according to (2),
   wherein the control unit changes the question to a question with a short required time to answer in a case where the degree of concentration is a predetermined value or less.
(5) The information processing device according to (2),
   wherein the control unit provides the user with another content related to a question to be generated in a case where the degree of concentration is a predetermined value or less.
(6) The information processing device according to any of (1) to (5),
   wherein the control unit generates the question and the similar question to the user on a basis of the degrees of learning and the acquisition speeds of a plurality of users.
(7) The information processing device according to any of (1) to (6),
   wherein the control unit updates the degree of learning and the acquisition speed of the user.
(8) The information processing device according to (7),
   wherein the control unit generates information to be presented to the user, updates the degree of learning depending on an answer result of the user with regard to the question, and generates information for presenting an explanation of the question depending on the answer result of the user.
(9) The information processing device according to (7) or (8),
   wherein the control unit updates the degree of learning on a basis of a correct answer rate of the user with regard to the question.
(10) The information processing device according to any of (7) to (9),
   wherein the control unit updates the acquisition speed on a basis of whether the user has correctly answered the similar question.
(11) The information processing device according to any of (7) to (10),
   wherein the control unit updates a degree of concentration of the user on a basis of information on a learning state of the user.
(12) The information processing device according to any of (1) to (12),
   wherein the control unit generates the question and the similar question by applying a condition to a template prepared in advance.
(13) The information processing device according to (12),
   wherein the control unit obtains a degree of concentration of the user and generates the question and the similar question by changing the condition to be applied to the template depending on the obtained degree of concentration.
(14) An information processing method including:
   obtaining a degree of learning and an acquisition speed of a user;
   generating a question to the user on a basis of the obtained degree of learning; and
   generating a similar question related to the generated question on a basis of the obtained acquisition speed.
(15) A computer program for causing a computer to execute:
   obtaining a degree of learning and an acquisition speed of a user;
   generating a question to the user on a basis of the obtained degree of learning; and
   generating a similar question related to the generated question on a basis of the obtained acquisition speed.

### Reference Signs List

- 1: user
- 10: learning system
- 20: network
- 100: question management server
- 110: information obtaining unit
- 120: control unit
- 121: state calculating unit
- 122: question generating unit
- 123: information generating unit
- 130: storage unit
- 151: template
- 152: question
- 153: question sentence
- 154: explanation sentence
- 155: similar question sentence
- 200: answering terminal
- 210: input unit
- 220: storage unit
- 230: control unit
- 240: display unit
- 250: communication unit
- 300: sensor

## Claims

1. An information processing device comprising:
a control unit configured to obtain a degree of learning and an acquisition speed of a user, generate a question to the user on a basis of the obtained degree of learning, and generate a similar question related to the generated question on a basis of the obtained acquisition speed.

2. The information processing device according to claim 1,
wherein the control unit obtains a degree of concentration of the user, and generates the question and the similar question on a basis of the obtained degree of concentration.

3. The information processing device according to claim 2,
wherein the control unit changes a category of a question to be generated in a case where the degree of concentration is a predetermined value or less.

4. The information processing device according to claim 2,
wherein the control unit changes the question to a question with a short required time to answer in a case where the degree of concentration is a predetermined value or less.

5. The information processing device according to claim 2,
wherein the control unit provides the user with another content related to a question to be generated in a case where the degree of concentration is a predetermined value or less.

6. The information processing device according to claim 1,
wherein the control unit generates the question and the similar question to the user on a basis of the degrees of learning and the acquisition speeds of a plurality of users.

7. The information processing device according to claim 1,
wherein the control unit updates the degree of learning and the acquisition speed of the user.

8. The information processing device according to claim 7,
wherein the control unit generates information to be presented to the user, updates the degree of learning depending on an answer result of the user with regard to the question, and generates information for presenting an explanation of the question depending on the answer result of the user.

9. The information processing device according to claim 7,
wherein the control unit updates the degree of learning on a basis of a correct answer rate of the user with regard to the question.

10. The information processing device according to claim 7,
wherein the control unit updates the acquisition speed on a basis of whether the user has correctly answered the similar question.

11. The information processing device according to claim 7,
wherein the control unit updates a degree of concentration of the user on a basis of information on a learning state of the user.

12. The information processing device according to claim 1,
wherein the control unit generates the question and the similar question by applying a condition to a template prepared in advance.

13. The information processing device according to claim 12,
wherein the control unit obtains a degree of concentration of the user and generates the question and the similar question by changing the condition to be applied to the template depending on the obtained degree of concentration.

14. An information processing method comprising:
obtaining a degree of learning and an acquisition speed of a user;
generating a question to the user on a basis of the obtained degree of learning; and
generating a similar question related to the generated question on a basis of the obtained acquisition speed.

15. A computer program for causing a computer to execute:
obtaining a degree of learning and an acquisition speed of a user;
generating a question to the user on a basis of the obtained degree of learning; and
generating a similar question related to the generated question on a basis of the obtained acquisition speed.
